# EUROPÄISCHE PATENTSCHRIFT

(11) **EP 3 395 660 B1**
(45) Veröffentlichungstag und Bekanntmachung des Hinweises auf die Patenterteilung: **13.05.2020**
(21) Anmeldenummer: 18159602.4
(22) Anmeldetag: 01.03.2018
(51) Int. Cl.: B62K 21/10, B62K 21/14

(54) **VORRICHTUNG UND VERFAHREN ZUM REGELN EINES LENKWINKELS BEI EINEM ZWEIRADLENKER**
DEVICE AND METHOD FOR CONTROLLING A STEERING ANGLE WITH A BICYCLE HANDLE BAR
DISPOSITIF ET PROCÉDÉ DE RÉGLAGE D'UN ANGLE DE DIRECTION D'UN GUIDON DE DEUX-ROUES

(30) Priorität: 27.04.2017 DE 102017207089
(43) Veröffentlichungstag der Anmeldung: 31.10.2018
(73) Patentinhaber: Robert Bosch GmbH, 70442 Stuttgart (DE)
(72) Erfinder: Dackermann, Tim, 72072 Tuebingen (DE); Dauer, Felix, 72074 Tuebingen (DE)

(56) Entgegenhaltungen:
- EP-A1- 2 371 696
- NL-A- 9 200 277
- US-A1- 2011 133 428

## Beschreibung

### Stand der Technik

Der sichere Fahrzustand eines Zweirads hängt stark vom Lenkwinkeleinschlag des Lenkers ab. Wird der Zweiradlenker zu schnell gedreht oder ein bestimmter Lenkwinkel überschritten, kann der Fahrer die Kontrolle über das Fahrrad verlieren und stürzen.

Aus der DE 102 21 721 A1 ist eine Vorrichtung zum Begrenzen des Einschlagwinkels mittels eines Anschlags bekannt. Der Anschlag kann mittels einer Steuerungseinheit geeignet positioniert werden.

Aufgabe dieser Erfindung ist es, eine Vorrichtung, ein System und ein Verfahren für Zweiräder zu entwickeln, die zu große Lenkwinkel begrenzen können. Dokument EP2371696A1 zeigt die Präambel des Anspruchs 1.

### Offenbarung der Erfindung

Zur Lösung der Aufgabe werden erfindungsgemäß eine Vorrichtung, sowie ein System, welches die Vorrichtung umfasst, zum Regeln eines Lenkwinkels bei einem Zweiradlenker vorgeschlagen. Zusätzlich wird ein Verfahren, welches durch das erfindungsgemäße System zum Regeln eines Lenkwinkels ausgeführt wird, vorgeschlagen.

Die Vorrichtung zum Regeln eines Lenkwinkels bei einem Zweiradlenker umfasst wenigstens ein Steuerrohr und eine durch das Steuerrohr hindurchlaufende Lenkstange, welche in dem Steuerrohr drehbar gelagert ist. Zusätzlich umfasst die Vorrichtung ein sich innerhalb des Steuerrohrs befindendes Federelement, das bei einer Drehbewegung der Lenkstange eine der Drehbewegung entgegengesetzte Kraft zum Regeln der Drehbewegung in Abhängigkeit des Lenkwinkels des Zweiradlenkers erzeugt. Ein Lenkwinkel von 0° bezeichnet erfindungsgemäß eine Position des Zweiradlenkers, bei dem das Zweirad geradeausfährt. Wird der Zweiradlenker aus dieser Position nach rechts oder links gedreht, so ändert sich der Lenkwinkel entsprechend. Der Lenkwinkel bei einem Zweirad ist i.d.R. zwischen 90° und - 90° einstellbar, wobei die 90° einer Drehung im Uhrzeigersinn und -90° einer Drehung gegen den Uhrzeigersinn entsprechen.

Bei der Vorrichtung wird die Eigenschaft eines Federelements genutzt, dass sich die Federkraft mit einer Auslenkung der Feder ändert. Das heißt, die Feder wird in Abhängigkeit des Lenkwinkels gestaucht oder gedehnt, wodurch eine der Drehbewegung entgegengesetzte Kraft entsteht. Der Fahrer bekommt also abhängig von dem Lenkwinkel des Zweiradlenkers eine Gegenkraft zu spüren, die er überwinden muss, um den Zweiradlenker weiter auszulenken. Die Abhängigkeit der Gegenkraft von der Größe des Lenkwinkels ermöglicht z.B., dass der Fahrer bei kleinen Lenkwinkeln eine kleine Gegenkraft und bei großen Lenkwinkeln eine große Gegenkraft zu spüren bekommt.

Vorzugsweise ist das Federelement dazu ausgebildet, die Kraft, die der Drehbewegung entgegengesetzt ist, bei Vergrößerung des Lenkwinkels linear zu erhöhen. Für diese Anwedung werden entsprechend Federn verwendet, die lineare Federkennlinie besitzen. Hiermit wird sichergestellt, dass große Lenkwinkel, die zu Stürzen führen können, auch entsprechend begrenzt werden. Bei kleinen Lenkwinkeln, die unkritisch sind, erhält der Fahrer zum Drehen des Zweiradlenkers kaum Gegenkraft.

Eine andere Möglichkeit ist, dass das Federelement dazu ausgebildet ist, die der Drehbewegung entgegengesetzte Kraft bei Vergrößerung des Lenkwinkels nichtlinear zu erhöhen. Hierzu können Federelemente verwendet werden, deren Federkennlinie entsprechend nichtlinear verläuft. Es wäre aber auch vorstellbar, mehrere Feder in Reihe und/oder parallel zueinander zu schalten, wodurch auch ein nichtlinearer Verlauf der Federkraft in Abhängigkeit des Lenkwinkels entstehen kann. Die Feder kann beispielsweise dazu ausgebildet sein, die der Drehbewegung entgegengesetzte Kraft bei Vergrößerung des Lenkwinkels degressiv zu erhöhen. Federelemente mit degressiver Federkennlinie haben die Eigenschaft, dass die Federkraft mit größerem Federweg abnimmt. Das wäre z.B. sinnvoll bei Anwendungen, bei denen der Lenkwinkel für eine gewisse Zeit konstant gehalten werden soll. Z.B. kann es bei geraden Downhillfahrten auf Grund des huckeligen Untergrunds schnell dazu kommen, dass der Lenker in eine bestimmte Richtung gerissen wird. Das kann mittels solch einer Feder verhindert werden. Das Federelement kann aber auch dazu ausgebildet sein, die der Drehbewegung entgegengesetzte Kraft bei Vergrößerung des Lenkwinkels progressiv zu erhöhen. Federelemente mit degressiver Federkennlinie haben die Eigenschaft, dass die Federkraft mit größerem Federweg zunimmt. Somit könnten große Lenkwinkel entsprechend noch stärker begrenzt werden und kleine Lenkwinkel noch müheloser einstellbar sein.

Vorzugsweise ist eine Komponente des Federelements dazu ausgebildet, die Gegenkraft zu variieren. Somit kann das Federelement die Gegenkraft an bestimmte Fahrsituationen anpassen. Wird beispielsweise während einer Downhill-Fahrt ein bestimmter Lenkwinkel ausgeführt, kann das Federelement die Gegenkraft gegenüber einem gleichen Lenkwinkel, der auf asphaltierter, gerade Strecke ausgeführt wird, abschwächen, um dem Fahrer somit zu ermöglichen, schneller auf Richtungsänderungen zu reagieren. Hierzu kann die Feder beispielsweise eine magnetische Komponente aufweisen, dessen Magnetfeld einstellbar ist und eine Auswirkung auf die Federkraft hat. Bevorzugt ist die Komponente des Federelements zusätzlich dazu ausgebildet, die Gegenkraft in Abhängigkeit einer Geschwindigkeit des Zweirads zu variieren. Somit kann das Federelement die Gegenkraft zusätzlich an die Geschwindigkeit des Fahrrads anpassen. So kann z.B. vorgesehen sein, dass gleiche Lenkwinkel, die bei unterschiedlicher Geschwindigkeit des Fahrrads ausgeführt werden, unterschiedlich stark begrenzt werden.

Vorzugsweise ist das Federelement mit dem Steuerrohr und der Lenkstange verbunden. Da sich Steuerrohr und Lenkstange bei einem Lenkeinschlag relativ zueinander bewegen, ermöglicht diese Anordnung des Federelements einfach, dass das Federelement, wie beispielsweise eine Spiralfeder, in Abhängigkeit des Lenkwinkels gestaucht oder gedehnt wird und damit die der Drehbewegung entgegengesetzte Kraft erzeugt.

Erfindungsgemäss ist das Federelement mit der Lenkstange verbunden, die bei einem Lenkeinschlag eine Drehbewegung ausführt. Zusätzlich umfasst die Vorrichtung hierbei einen ersten Anschlag, der innerhalb des Steuerrohrs, welches bei einem Lenkeinschlag keine Drehbewegung ausführt, verbunden ist. Dieser Anschlag, beispielsweise ein mechanischer Anschlag, ist dazu ausgebildet, bei einer Drehbewegung der Lenkstange in Abhängigkeit des ausgeführten Lenkwinkels das Federelement zu stauchen oder zu dehnen. Bei einem Kontakt zwischen Anschlag und Federelement kommt es also zu einem Stauchen der Feder und entsprechend des hierbei zurückgelegten Federweges zu einer Gegenkraft. Des Weiteren ist erfindungsgemäss ein innerhalb des Steuerrohrs angeordneter zweiter Anschlag vorgesehen sein, der mit der Lenkstange verbunden ist. Der erste Anschlag wäre hierbei mit dem Steuerrohr verbunden, sodass der zweite Anschlag bei einer Drehbewegung der Lenkstange in Abhängigkeit des Lenkwinkels auf den ersten Anschlag einwirkt. Es würde also dazu kommen, dass ab einem definierten Lenkwinkel ein harter Anschlag des Zweiradlenkers stattfindet und eine weitere Vergrößerung des Lenkwinkels somit verhindert wird. Der Fahrer würde durch diese Anordnung zunächst durch die der Drehbewegung entgegengesetzte Kraft des Federelements ein Gefühl für eine Näherung an den harten Anschlag erhalten, bis der erste und zweite Anschlag aufeinander einwirken und der harte Anschlag erreicht ist. Dies hat den Vorteil, dass der Fahrer nicht plötzlich von dem harten Anschlag überrascht wird und sich darauf einstellen kann.

Erfindungsgemäss ist eine Komponente des ersten Anschlags dazu ausgebildet, die der Drehbewegung entgegengesetzte Kraft zu variieren. Hierzu kann beispielsweise vorgesehen sein, dass der erste Anschlag auf einer Art Führung angebracht ist, die eine Verstellung der Position des ersten Anschlags ermöglicht. In Abhängigkeit der Position des ersten Anschlags kann wiederum entsprechend ein Lenkwinkel bei dem es zum Kontakt zwischen dem ersten Anschlag und dem Federelement kommt, verändert und somit auch das Einsetzen der, der Drehbewegung entgegengesetzten Kraft verzögert oder beschleunigt werden. Entsprechendes wäre auch für den zweiten Anschlag gültig. Somit könnte man z.B. einfach regeln, ab welchem Lenkwinkel die Gegenkraft überhaupt erst einsetzen soll. In Kombination mit dem ersten Anschlag wäre in diesem Zusammenhang auch möglich, den Lenkwinkel zu regeln, ab dem der erste Anschlag auf den zweiten Anschlag einwirkt.

Vorzugsweise umfasst die die Vorrichtung zusätzlich ein Dämpferelement zum Dämpfen der Kraft, die der Drehbewegung entgegengesetzt ist. Das Dämpferelement ist hierbei parallel zu dem Federelement angeordnet und sorgt dafür, dass die Rückstellkraft der Feder gedämpft wird. Somit kann ermöglicht werden, dass der Fahrer sicherer den Zweiradlenker wieder zurückführen kann. Andernfalls würde der Fahrer beim Zurückführen eine Gegenkraft aufbringen müssen, da die Federkraft nun in Richtung des Lenkeinschlags gerichtet wäre. Falls der Fahrer diese der Federkraft entgegengesetzte Kraft nicht aufbringen würde, würde der Zweiradlenker in die ursprüngliche 0°-Position zurückschnellen, was zu einer schnellen Richtungsänderung führen würde. Dies wiederum kann schnell zu einem Sturz führen.

Die Erfindung umfasst zudem ein System, welches die Vorrichtung zum Regeln eines Lenkwinkels bei einem Zweiradlenker, eine zusätzliche Recheneinheit und eine erste Erfassungseinheit zur Erfassung einer Drehbewegung einer Lenkstange umfasst. Die Recheneinheit ist dazu ausgebildet, in Abhängigkeit der erfassten Drehbewegung der Lenkstange eine Komponente eines Federelements der Vorrichtung anzusteuern. Die Komponente des Federelements ist wiederum dazu ausgebildet, eine der Drehbewegung der Lenkstange der Vorrichtung entgegengesetzte Kraft zum Regeln der Drehbewegung in Abhängigkeit des Lenkwinkels zu variieren. Mittels dieses Systems ist es möglich, die erzeugte Gegenkraft durch eine aktive Ansteuerung zu variieren. Des Weiteren umfasst die Erfindung ein Fahrrad mit der Vorrichtung oder dem System zum Regeln eines Lenkwinkels bei einem Zweirad.

Die Erfindung umfasst zudem ein Verfahren zum Regeln eines Lenkwinkels bei einem Zweiradlenker. Hierbei wird zunächst eine Drehbewegung einer Lenkstange des Fahrrads mittels einer Erfassungseinheit erfasst. Abhängig von dem durch die Drehbewegung erzeugten Lenkwinkel wird anschließend mittels eines sich innerhalb des Steuerrohrs befindenden Federelements eine der Drehbewegung entgegengesetzte Kraft zum Regeln der Drehbewegung erzeugt.

### Beschreibung der Zeichnungen

Figur 1 zeigt in der allgemeinen Ansicht einen Aufbau der Vorrichtung zum Regeln eines Lenkwinkels bei einem Fahrradlenker angordnet an einem Fahrradrahmen.
Figur 2a zeigt eine erste nicht beanspruchte Ausführungsform der Vorrichtung zum Regeln eines Lenkwinkels bei einem Zweiradlenker.
Figur 2b zeigt eine zweite nicht beanspruchte Ausführungsform der Vorrichtung zum Regeln eines Lenkwinkels bei einem Zweiradlenker.
Figur 3 zeigt eine dritte nicht beanspruchte Ausführungsform der Vorrichtung zum Regeln eines Lenkwinkels bei einem Zweiradlenker.
Figur 4 zeigt eine vierte Ausführungsform der Vorrichtung zum Regeln eines Lenkwinkels bei einem Zweiradlenker.
Figur 5 zeigt eine fünfte Ausführungsform der Vorrichtung zum Regeln eines Lenkwinkels bei einem Zweiradlenker.
Figur 6 zeigt eine sechste Ausführungsform der Vorrichtung zum Regeln eines Lenkwinkels bei einem Zweiradlenker.
Figur 7 zeigt eine Ausführungsform eines Systems zum Regeln eines Lenkwinkels bei einem Zweiradlenker.
Figur 8 zeigt einen Verfahrensablauf gemäß der Erfindung zum Regeln eines Lenkwinkels bei einem Zweiradlenker.

### Ausführungsbeispiele

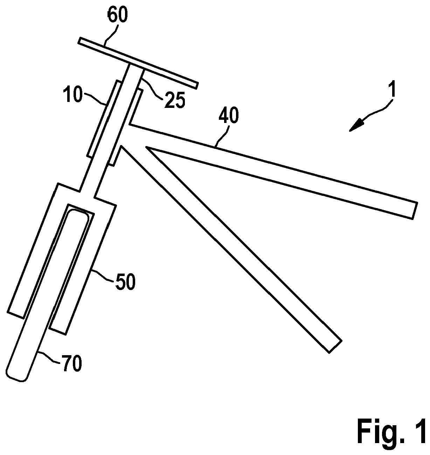

Figur 1 zeigt in der Übersicht beispielhaft einen Aufbau der Vorrichtung zum Regeln eines Lenkwinkels bei einem Lenker 60 eines Fahrrads 1. Die Vorrichtung zum Regeln eines Lenkwinkels bei einem Lenker 60 eines Fahrrads 1 ist an einem Fahrradrahmen 40 angeordnet. Ein Steuerrohr 10, durch welches eine in dem Steuerrohr drehbar gelagerte Lenkstange 25 hindurchläuft, ist hierbei an einem Fahrradrahmen 40 angebracht. Die Lenkstange 25 ist wiederum mit dem Lenker 60 des Fahrrads 1 verbunden und vollzieht bei einem Lenkeinschlag eine Drehbewegung, um ein Vorderrad 70 des Fahrrads entsprechend ebenfalls auszulenken. Das Federelement zum Regeln der Drehbewegung der Lenkstange befindet sich ist innerhalb und/oder außerhalb des Steuerrohrs 10 und ist dazu ausgebildet, bei einer Drehbewegung der Lenkstange 25 eine der Drehbewegung entgegengesetzte Kraft in Abhängigkeit des Lenkwinkels des Zweiradlenkers zu erzeugen.

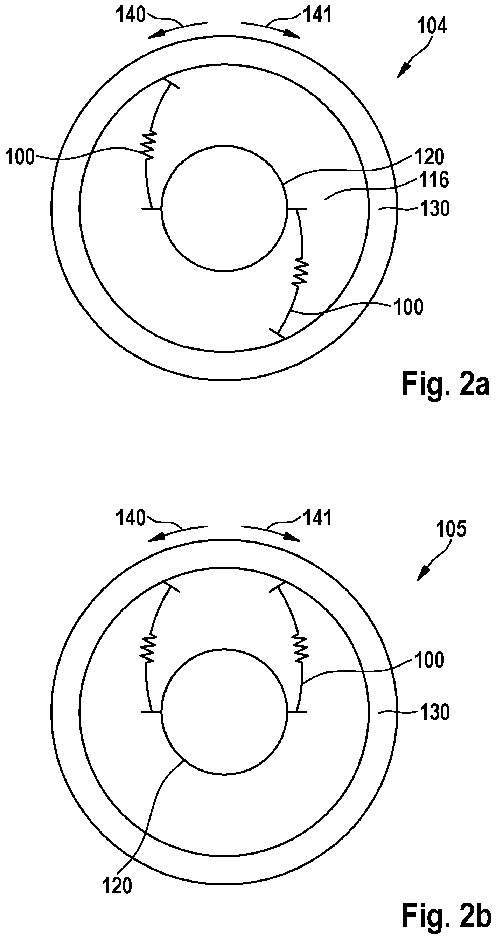

Figur 2a zeigt eine erste nicht beanspruchte Ausführungsform der Vorrichtung 104 zum Regeln eines Lenkwinkels bei einem Zweiradlenker. In dem Hohlbereich 116 zwischen Steuerrohr 130 und Lenkstange 120 sind zwei Federelemente 100 um 180° versetzt angeordnet. In dieser Ausführungsform sind die Federelemente 100 als Spiralfedern ausgebildet. Die zwei Federelemente 100 sind jeweils an einem Ende mit der Lenkstange 130 und an dem anderen Ende mit dem Steuerrohr 130 verbunden. Vollzieht nun die Lenkstange 120 durch einen Lenkeinschlag eine Drehbewegung in eine Drehrichtung 141 im Uhrzeigersinn, so werden durch die Relativbewegung der Lenkstange 120 zu dem stehenden Steuerrohr 130 beide Federelemente 100 gestaucht. Vollzieht die Lenkstange 120 durch einen Lenkeinschlag dagegen eine Drehbewegung in eine Drehrichtung 140 gegen den Uhrzeigersinn, so werden durch die Relativbewegung der Lenkstange 120 zu dem stehenden Steuerrohr 130 beide Federelemente 100 gedehnt. Durch die Stauchung oder Dehnung der Federelemente 100 wird eine Kraft erzeugt, die der Drehbewegung entgegengesetzt ist und die bei einer linearen Federkennlinie mit größerem Lenkwinkel und damit größerem Federweg ansteigen würde. Vorstellbar wäre hierbei auch, dass nur ein Federelement 100 vorhanden wäre, welches entsprechend der Drehrichtung 140 oder 141 gestaucht oder gedehnt wird.

Figur 2b zeigt im Unterschied zu der ersten nicht beanspruchten Ausführungsform, dargestellt in Figur 2a eine zweite nicht beanspruchte Ausführungsform, bei der die zwei Federelemente 100 spiegelbildlich angeordnet sind. Somit wird unabhängig von der Drehrichtung 140 oder 141 eines der beiden Federelemente 100 gedehnt und das andere Federelement 100 gestaucht. Daher erhält man durch die spiegelbildliche Anordnung der zwei Federelemente 100 in beide Drehrichtungen 140 oder 141 eine vergleichbar gleich große Gegenkraft zum Regeln der Drehbewegung der Lenkstange 120.

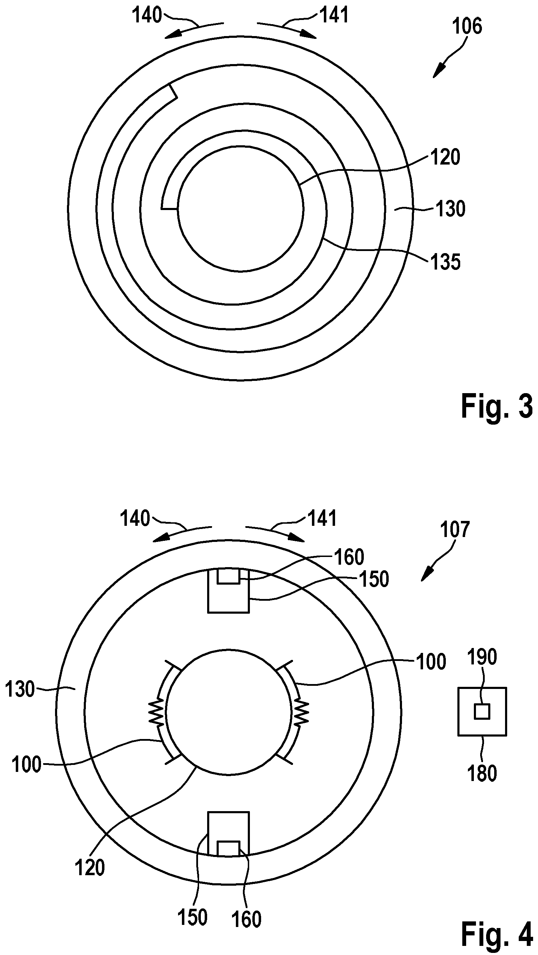

Figur 3 zeigt eine dritte nicht beanspruchte Ausführungsform einer Vorrichtung 106 zum Regeln eines Lenkwinkels bei einem Zweiradlenker. Bei dieser Ausführungsform ist das Federelement 135, welches z.B. als Torsionsfeder ausgebildet sein kann, mit der Lenkstange 120 und dem Steuerrohr 130 verbunden und zudem um die Lenkstange 120 herum aufgespannt. Vollzieht nun die Lenkstange 120 durch einen Lenkeinschlag eine Drehbewegung in eine Drehrichtung 141 im Uhrzeigersinn, so wird das Federelement 135 entsprechend des hierbei zurückgelegten Lenkwinkels, ebenfalls um diesen Lenkwinkel ausgelenkt. Es wird auch hier eine Kraft in Abhängigkeit des Lenkwinkels erzeugt, die der Drehbewegung entgegengesetzt ist.

Figur 4 zeigt eine vierte Ausführungsform einer Vorrichtung 107 zum Regeln eines Lenkwinkels bei einem Zweiradlenker. Bei dieser Ausführungsform umfasst die Vorrichtung im Unterschied zu den zuvor dargestellten Ausführungsformen zusätzlich zwei innerhalb des Steuerrohrs angeordnete erste Anschläge 150. Diese ersten Anschläge 150, welche z.B. als mechanische Anschläge ausgebildet sein können, sind hierbei mit dem Steuerrohr 130 verbunden und spiegelbildlich zueinander angeordnet. Die zwei Federelemente 100 sind mit der Lenkstange 120 verbunden und ebenfalls spiegelbildlich zueinander angeordnet. Federelemente 100 und erste Anschläge 100 sind in dieser Darstellung um einen gewissen Winkel zueinander versetzt angeordnet. Somit kommt es erst nachdem die Lenkstange eine Drehbewegung um diesen Lenkwinkel durchgeführt hat, zum Formschluss zwischen Federelement 100 und erstem Anschlag 150, wodurch das jeweilige Federelement 100 gestaucht wird. Durch die Stauchung der Federelemente 100 wird eine Kraft erzeugt, die der Drehbewegung entgegengesetzt ist. Vorstellbar wäre hierbei auch, dass nur ein erster Anschlag 150 oder nur ein Federelement 100 vorhanden wäre.

Zusätzlich umfasst die Vorrichtung eine Recheneinheit 190, die dazu ausgebildet ist, einen Aktor 160 anzusteuern. Der Aktor kann zum Beispiel als Linearspindelantrieb ausgebildet sein und ist dazu ausgebildet, die Position der ersten Anschläge 150 zu verstellen und somit den Zeitpunkt, ab dem es zu einem Formschluss zwischen ersten Anschlag 150 und Federelement 100 kommt, einzustellen. Zudem umfasst die Vorrichtung eine Erfassungseinheit 180 zum Erfassen von Betriebsgrößen, wie z.B. Geschwindigkeit des Zweirads oder Neigungswinkel des Zweirads. Die Recheneinheit 190 ist in dieser Ausführungsform in die Erfassungseinheit 180 integriert. Die ersten Anschläge 150 können in Abhängigkeit der erfassten Betriebsgrößen mittels des Aktors 160 verstellt werden. Wird z.B. eine hohe Geschwindigkeit erfasst, so kann ein schneller Formschluss zwischen Federelement 100 und erstem Anschlag 150 vorteilhaft sein, um einen möglichen Sturz durch einen zu großen Lenkwinkel zu verhindern.

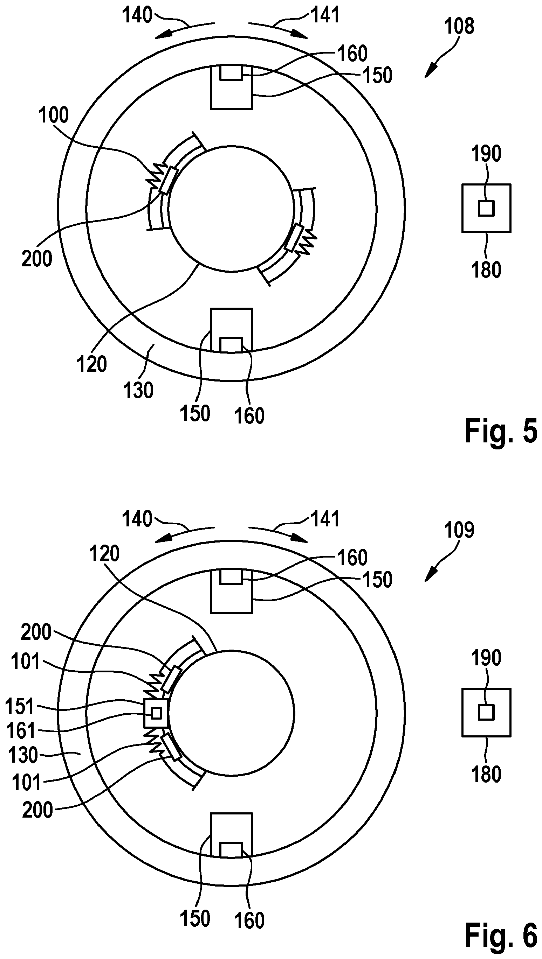

Figur 5 zeigt eine fünfte Ausführungsform einer Vorrichtung 107 zum Regeln eines Lenkwinkels bei einem Zweiradlenker. Bei dieser Ausführungsform umfasst die Vorrichtung im Unterschied zu der in der zuvor dargestellten vierten Ausführungsform zusätzlich parallel zu den Federelementen 100 geschaltete Dämpferelemente 200. Mit den Dämpferelementen kann die Rückstellkraft der Federelemente 100 gedämpft werden.

Figur 6 zeigt eine sechste Ausführungsform einer Vorrichtung 107 zum Regeln eines Lenkwinkels bei einem Zweiradlenker. Bei dieser Ausführungsform umfasst die Vorrichtung im Unterschied zu der in der zuvor dargestellten fünften Ausführungsform einen zweiten Anschlag 151, der mit der Lenkstange 120 verbunden ist. In dieser Ausführungsform ist der zweite Anschlag 151 als Hohlraumzylinder mit auf beiden Seiten innenliegenden Federelementen 101 ausgebildet. Es wäre auch vorstellbar, dass dieser zweite Anschlag 151 als massives Bauteil mit um ihn herumlaufenden Federelementen 101 ausgebildet ist. Wird nun eine Drehbewegung der Lenkstange 120 in einer der Drehrichtungen 140 oder 141 ausgeführt, kommt es ab einem bestimmten Zeitpunkt zum Formschluss zwischen einem ersten Anschlag 150 und einem Federelement 101 mit parallel geschaltetem Dämpfer 200. Bei Vergrößerung des Lenkwinkels kommt es aufgrund der Stauchung des Federelements 101 zu einer Kraft, die der Drehbewegung entgegengesetzt ist. Nach einer gewissen Stauchung des Federelements 101 kommt es dann zu einem Formschluss zwischen dem ersten Anschlag 150 und dem zweiten Anschlag 151, wodurch es zu einem harten Anschlag des Zweiradlenkers kommt. Das Zusammenwirken von erstem 150 und zweitem Anschlag 151 legen also den maximal möglichen Lenkwinkel fest. Auch der zweite Anschlag 151 besitzt in dieser Ausführungsform einen zweiten Aktor 161, über den er an der Lenkstange 120 positioniert werden kann. In dieser Ausführungsform wird der zweite Aktor 161 über dieselbe Recheneinheit 180, wie der erste Aktor gesteuert. Es wäre aber auch vorstellbar, den zweiten Aktor 161 über eine separate Recheneinheit zu steuern.

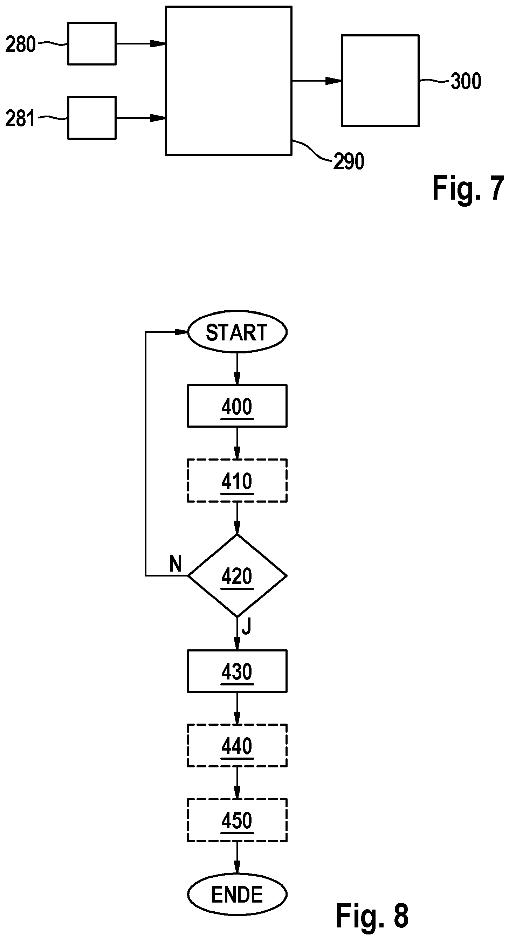

Figur 7 zeigt schematisch eine Ausführungsform eines Systems zum Regeln eines Lenkwinkels bei einem Zweiradlenker. Das System weist eine Vorrichtung 300 zum Regeln des Lenkwinkels bei dem Zweiradlenker, eine Recheneinheit 290 und eine erste Erfassungseinheit 280 auf. Die Recheneinheit 290 ist dazu ausgebildet, eine Komponente eines Federelements der Vorrichtung 300 anzusteuern und eine der Drehbewegung einer Lenkstange der Vorrichtung 300 entgegengesetzte Kraft in Abhängigkeit des Lenkwinkels zu variieren. Zur Erfassung einer Drehbewegung der Lenkstange dient die erste Erfassungseinheit 280, welche zur Erfassung einer Drehbewegung der Lenkstange ausgebildet ist. Z.B. kann die erste Erfassungseinheit 290 einen Drehwinkelsensor umfassen, dessen Signale die Steuereinheit 300 empfängt und auswertet. Vorstellbar wäre z.B. im Falle der Vorrichtungen aus Figur 1 bis Figur 6, dass es sich bei den Federelementen um Magnetfedern handelt, deren Federsteifigkeit z.B. über Veränderung der Magnetfeldlinien veränderbar ist. Optional kann das System einen Geschwindigkeitssensor 281 umfassen, der dazu ausgebildet ist, die Geschwindigkeit des Fahrrads zu erfassen. Die Steuereinheit 290 kann diese Geschwindigkeitssignale empfangen, eine Komponente des Federelements der Vorrichtung 380 oder einen ersten oder zweiten Anschlag der Vorrichtung 300 ansteuern und eine der Drehbewegung der Lenkstange der Vorrichtung 300 entgegengesetzte Kraft zusätzlich in Abhängigkeit der Geschwindigkeit des Fahrrads variieren.

Figur 8 zeigt einen Verfahrensablauf zum Regeln eines Lenkwinkels bei einem Zweiradlenker. Zunächst wird das Verfahren gemäß Figur 8 gestartet und in einem sich daran anschließenden ersten Verfahrensschritt 400 eine Drehbewegung einer durch ein Steuerrohr hindurchlaufenden, in dem Steuerrohr drehbar gelagerten Lenkstange eines Fahrrads mittels einer ersten Erfassungseinheit erfasst. Bei der Erfassungseinheit kann es sich z.B. um einen Drehwinkelsensor handeln. In dem nächsten Verfahrensschritt 420 wird der Drehwinkel der Drehbewegung mit einem Schwellenwert verglichen. Ist der Drehwinkel der Drehbewegung kleiner als der Schwellenwert, ist das Unfallrisiko infolge eines zu großen Lenkwinkels nicht groß genug und das Verfahren wird beendet oder alternativ von vorne gestartet. Ist der ermittelte Drehwinkel der Drehbewegung größer als der Schwellenwert, ist die Gefahr eines Unfalls infolge eines zu großen Lenkwinkels zu groß und in einem dem Verfahrensschritt 420 folgenden Verfahrensschritt 430 wird eine der Drehbewegung entgegengesetzte Kraft zum Regeln der Drehbewegung mittels eines sich innerhalb des Steuerrohrs befindenden Federelements erzeugt. Daraufhin wird das Verfahren beendet.

Optional kann in einem auf den Verfahrensschritt 400 folgenden Verfahrensschritt 410 die Geschwindigkeit des Fahrrads mittels einer Geschwindigkeitserfassungseinheit erfasst werden. In dem Verfahrensschritt 440 kann die Rückstellkraft des Federelements und damit die der Drehbewegung der Lenkstange entgegengesetzte Kraft hierbei zusätzlich in Abhängigkeit einer Geschwindigkeit des Fahrrads variiert werden.

Optional kann zusätzlich in einem auf den Verfahrensschritt 430 folgenden Verfahrensschritt 440 ein erster Anschlag, der in Abhängigkeit des Lenkwinkels das Federelement staucht oder dehnt, positioniert werden, um die der Drehbewegung der Lenkstange entgegengesetzte Kraft zu variieren.

Optional kann zusätzlich in einem auf den Verfahrensschritt 440 folgenden Verfahrensschritt 450 ein zweiter Anschlag, der in Abhängigkeit des Lenkwinkels auf den ersten Anschlag einwirkt, positioniert werden, um die der Drehbewegung der Lenkstange entgegengesetzte Kraft zu variieren.

## Patentansprüche

1. Vorrichtung (104, 105, 106, 107, 108, 109, 300) zum Regeln eines Lenkwinkels bei einem Zweiradlenker, wobei die Vorrichtung (104, 105, 106, 107, 108, 109, 300) wenigstens
- ein Steuerrohr (10, 130),
- eine durch das Steuerrohr (10, 130) hindurchlaufende in dem Steuerrohr (10, 130) drehbar gelagerte Lenkstange (25, 120),
- wenigstens ein sich innerhalb des Steuerrohrs (10, 130) befindendes Federelement (100, 101, 310)
umfasst,
wobei das wenigstens eine Federelement (100, 101, 310) dazu ausgebildet ist, bei einer Drehbewegung der Lenkstange (25, 120), eine der Drehbewegung entgegengesetzte Kraft zum Regeln der Drehbewegung in Abhängigkeit des Lenkwinkels des Zweiradlenkers zu erzeugen,
wobei das Federelement (100, 101, 310) mit der Lenkstange (25, 120) verbunden ist und die Vorrichtung (104, 105, 106, 107, 108, 109, 300) zusätzlich wenigstens einen innerhalb des Steuerrohrs (10, 130) angeordneten ersten Anschlag (150) umfasst, wobei der erste Anschlag (150) dazu ausgebildet ist, bei einer Drehbewegung der Lenkstange (25, 120) in Abhängigkeit des Lenkwinkels das Federelement (100, 101, 310) zu stauchen,
**dadurch gekennzeichnet, dass** eine Komponente des ersten (150) und/oder eines zweiten Anschlags (151) dazu ausgebildet ist, die der Drehbewegung entgegengesetzte Kraft zu variieren.

2. Vorrichtung (104, 105, 106, 107, 108, 109, 300) nach Anspruch 1, **dadurch gekennzeichnet, dass** das Federelement (100, 101, 310) dazu ausgebildet ist, die Kraft, die der der Drehbewegung entgegengesetzt ist, bei Vergrößerung des Lenkwinkels linear zu erhöhen.

3. Vorrichtung (104, 105, 106, 107, 108, 109, 300) nach Anspruch 1, **dadurch gekennzeichnet, dass** das Federelement (100, 101, 310) dazu ausgebildet ist, die der Drehbewegung entgegengesetzte Kraft bei Vergrößerung des Lenkwinkels nichtlinear, insbesondere degressiv oder progressiv zu erhöhen.

4. Vorrichtung (104, 105, 106, 107, 108, 109, 300) nach einem der Ansprüche 1 bis 3, **dadurch gekennzeichnet, dass** wenigstens eine Komponente des Federelements (100, 101, 310) dazu ausgebildet ist, die Kraft, die der Drehbewegung entgegengesetzte ist, zu variieren.

5. Vorrichtung (104, 105, 106, 107, 108, 109, 300) nach Anspruch 4, **dadurch gekennzeichnet, dass** die Komponente des Federelements (100, 101, 310) dazu ausgebildet ist, die Kraft, die der Drehbewegung entgegengesetzt ist, zusätzlich in Abhängigkeit der Geschwindigkeit des Zweirads zu variieren.

6. Vorrichtung (104, 105, 106, 107, 108, 109, 300) nach einem der Ansprüche 1 bis 5, **dadurch gekennzeichnet, dass** wenigstens der eine innerhalb des Steuerrohrs (10, 130) angeordneter zweiter Anschlag (151) vorgesehen ist, wobei der erste Anschlag (150) mit dem Steuerrohr (10, 130) und der zweite Anschlag (151) mit der Lenkstange (25, 120) verbunden ist und der zweite Anschlag (150) dazu ausgebildet ist, bei einer Drehbewegung der Lenkstange (25, 120) in Abhängigkeit des Lenkwinkels auf den ersten Anschlag (151) einzuwirken.

7. Vorrichtung (104, 105, 106, 107, 108, 109, 300) nach einem der Ansprüche 1 bis 6, **dadurch gekennzeichnet, dass** wenigstens ein Dämpferelement (200, 320) zum Dämpfen der Kraft, die der Drehbewegung entgegengesetzt ist, vorgesehen ist, wobei das Dämpferelement (200, 320) parallel zu dem Federelement (100, 101) angeordnet ist.

8. Verfahren zum Regeln eines Lenkwinkels bei einem Zweiradlenker, wobei das Verfahren durch eine Vorrichtung (104, 105, 106, 107, 108, 109, 300) nach einem der Ansprüche 1 bis 7 ausgeführt wird und das Verfahren die folgenden Verfahrensschritte umfasst:
- Erfassen (400) einer Drehbewegung einer drehbar gelagerten Lenkstange (25, 120) eines Zweirads mittels einer ersten Erfassungseinheit (180, 280), und
- Erzeugen (430) einer der Drehbewegung entgegengesetzten Kraft zum Regeln der Drehbewegung in Abhängigkeit des Lenkwinkels mittels eines sich innerhalb des Steuerrohr (10, 130) befindenden Federelements (100, 101).

9. System zum Regeln eines Lenkwinkels bei einem Zweiradlenker, wobei das System
- eine Vorrichtung (104, 105, 106, 107, 108, 109, 300) nach einem der Ansprüche 1 bis 8, und
- eine Recheneinheit (160, 290),
- eine erste Erfassungseinheit (180, 280) zur Erfassung einer Drehbewegung einer Lenkstange der Vorrichtung (104, 105, 106, 107, 108,109, 300) umfasst,
wobei die Recheneinheit (160, 290) dazu ausgebildet ist, in Abhängigkeit der erfassten Drehbewegung der Lenkstange (25, 120) wenigstens eine Komponente eines Federelements (100, 101) der Vorrichtung (104, 105, 106, 107, 108, 109, 300) derart anzusteuern, dass eine der Drehbewegung der Lenkstange (25, 120) entgegengesetzte Kraft zum Regeln der Drehbewegung in Abhängigkeit des Lenkwinkels variiert wird.

10. System nach Anspruch 10 zum Regel eines Lenkwinkels bei einem Zweirad, **dadurch gekennzeichnet, dass** das Zweirad zusätzlich eine zweite Erfassungseinheit (281) zur Erfassung der Geschwindigkeit des Zweirads umfasst, wobei die Recheneinheit (160, 290) die Kraft, die der Drehbewegung entgegengesetzt ist, regelt und in Abhängigkeit der Geschwindigkeit des Zweirads variiert.

11. Fahrrad (1) mit einer Vorrichtung (104, 105, 106, 107, 108, 109,300) nach einem der Ansprüche 1 bis 7 oder einem System nach einem der Ansprüche 9 oder 10.

## Claims

1. Device (104, 105, 106, 107, 108, 109, 300) for controlling a steering angle in a bicycle handlebar, wherein the device (104, 105, 106, 107, 108, 109, 300) comprises at least
- a head tube (10, 130),
- a steering rod (25, 120) which runs through the head tube (10, 130) and is rotatably mounted in the head tube (10, 130),
- at least one spring element (100, 101, 310) situated within the head tube (10, 130), wherein the at least one spring element (100, 101, 310) is designed, upon a rotational movement of the steering rod (25, 120), to generate a force opposed to the rotational movement to control the rotational movement in dependence on the steering angle of the bicycle handlebar,
wherein the spring element (100, 101, 310) is connected to the steering rod (25, 120), and the device (104, 105, 106, 107, 108, 109, 300) additionally comprises at least one first stop (150) which is arranged within the head tube (10, 130), wherein the first stop (150) is designed, upon a rotational movement of the steering rod (25, 120), to compress the spring element (100, 101, 310) in dependence on the steering angle,
**characterized in that** a component of the first (150) and/or of a second stop (151) is designed to vary the force opposed to the rotational movement.

2. Device (104, 105, 106, 107, 108, 109, 300) according to Claim 1, **characterized in that** the spring element (100, 101, 310) is designed, with an increase in the steering angle, to increase the force which is opposed to the rotational movement in a linear manner.

3. Device (104, 105, 106, 107, 108, 109, 300) according to Claim 1, **characterized in that** the spring element (100, 101, 310) is designed, with an increase in the steering angle, to increase the force opposed to the rotational movement in a non-linear manner, in particular in a degressive or progressive manner.

4. Device (104, 105, 106, 107, 108, 109, 300) according to one of Claims 1 to 3, **characterized in that** at least one component of the spring element (100, 101, 310) is designed to vary the force which is opposed to the rotational movement.

5. Device (104, 105, 106, 107, 108, 109, 300) according to Claim 4, **characterized in that** the component of the spring element (100, 101, 310) is designed to additionally vary the force which is opposed to the rotational movement in dependence on the speed of the bicycle.

6. Device (104, 105, 106, 107, 108, 109, 300) according to one of Claims 1 to 5, **characterized in that** at least the one second stop (151) arranged within the head tube (10, 130) is provided, wherein the first stop (150) is connected to the head tube (10, 130), and the second stop (151) is connected to the steering rod (25, 120), and the second stop (150) is designed, upon a rotational movement of the steering rod (25, 120), to act on the first stop (151) in dependence on the steering angle.

7. Device (104, 105, 106, 107, 108, 109, 300) according to one of Claims 1 to 6, **characterized in that** at least one damper element (200, 320) is provided for damping the force which is opposed to the rotational movement, wherein the damper element (200, 320) is arranged parallel to the spring element (100, 101).

8. Method for controlling a steering angle in a bicycle handlebar, wherein the method is carried out by a device (104, 105, 106, 107, 108, 109, 300) according to one of Claims 1 to 7, and the method comprises the following method steps:
- detecting (400) a rotational movement of a rotatably mounted steering rod (25, 120) of a bicycle by means of a first detection unit (180, 280), and
- generating (430) a force opposed to the rotational movement to control the rotational movement in dependence on the steering angle by means of a spring element (100, 101) situated within the head tube (10, 130).

9. System for controlling a steering angle in a bicycle handlebar, wherein the system comprises
- a device (104, 105, 106, 107, 108, 109, 300) according to one of Claims 1 to 8, and
- a computing unit (160, 290),
- a first detection unit (180, 280) for detecting a rotational movement of a steering rod of the device (104, 105, 106, 107, 108, 109, 300),
wherein the computing unit (160, 290) is designed, in dependence on the detected rotational movement of the steering rod (25, 120), to actuate at least one component of a spring element (100, 101) of the device (104, 105, 106, 107, 108, 109, 300) in such a way that, to control the rotational movement, a force opposed to the rotational movement of the steering rod (25, 120) is varied in dependence on the steering angle.

10. System according to Claim 10 for controlling a steering angle in a bicycle, **characterized in that** the bicycle additionally comprises a second detection unit (281) for detecting the speed of the bicycle, wherein the computing unit (160, 290) controls the force which is opposed to the rotational movement and varies it in dependence on the speed of the bicycle.

11. Bicycle (1) having a device (104, 105, 106, 107, 108, 109, 300) according to one of Claims 1 to 7 or a system according to either of Claims 9 and 10.

## Revendications

1. Dispositif (104, 105, 106, 107, 108, 109, 300) destiné à régler un angle de direction d'un guidon de deux roues, le dispositif (104, 105, 106, 107, 108, 109, 300) comportant au moins
- un tube de commande (10, 130),
- une barre de direction (25, 120) montée à rotation dans le tube de commande (10, 130) et s'étendant à travers le tube de commande (10, 130),
- au moins un élément à ressort (100, 101, 310) situé à l'intérieur du tube de commande (10, 130),
l'au moins un élément à ressort (100, 101, 310) étant conçu pour générer, lors d'un mouvement de rotation de la barre de direction (25, 120), une force opposée au mouvement de rotation et destiné à régler le mouvement de rotation en fonction de l'angle de direction du guidon de deux roues,
l'élément à ressort (100, 101, 310) étant relié à la barre de direction (25, 120) et le dispositif (104, 105, 106, 107, 108, 109, 300) comprenant en outre au moins une première butée (150) disposée à l'intérieur du tube de commande (10, 130), la première butée (150) étant conçue pour comprimer l'élément à ressort (100, 101, 310) en fonction de l'angle de direction lors d'un mouvement de rotation de la barre de direction (25, 120),
**caractérisé en ce qu'**un composant de la première (150) et/ou d'une deuxième butée (151) est conçu pour faire varier la force opposée au mouvement de rotation.

2. Dispositif (104, 105, 106, 107, 108, 109, 300) selon la revendication 1, **caractérisé en ce que** l'élément à ressort (100, 101, 310) est conçu pour augmenter linéairement la force opposée au mouvement de rotation lorsque l'angle de direction augmente.

3. Dispositif (104, 105, 106, 107, 108, 109, 300) selon la revendication 1, **caractérisé en ce que** l'élément à ressort (100, 101, 310) est conçu pour augmenter de manière non linéaire, notamment dégressive ou progressive, la force opposée au mouvement de rotation lorsque l'angle de direction augmente.

4. Dispositif (104, 105, 106, 107, 108, 109, 300) selon l'une des revendications 1 à 3, **caractérisé en ce qu'**au moins un composant de l'élément à ressort (100, 101, 310) est conçu pour faire varier la force opposée au mouvement de rotation.

5. Dispositif (104, 105, 106, 107, 108, 109, 300) selon la revendication 4, **caractérisé en ce que** la composante de l'élément à ressort (100, 101, 310) est conçue pour faire varier la force opposée au mouvement de rotation en plus en fonction de la vitesse du deux-roues.

6. Dispositif (104, 105, 106, 107, 108, 109, 300) selon l'une des revendications 1 à 5, **caractérisé en ce qu'**il est prévu au moins une deuxième butée (151) disposée à l'intérieur du tube de commande (10, 130), la première butée (150) est reliée au tube de commande (10, 130) et la deuxième butée (151) est reliée à la barre de direction (25, 120) et la deuxième butée (151) est conçue pour agir sur la première butée (150) en fonction de l'angle de direction lors d'un mouvement de rotation de la barre de direction (25, 120).

7. Dispositif (104, 105, 106, 107, 108, 109, 300) selon l'une des revendications 1 à 6, **caractérisé en ce qu'**au moins un élément amortisseur (200, 320) est prévu pour amortir la force opposée au mouvement de rotation, l'élément amortisseur (200, 320) étant disposé parallèlement à l'élément à ressort (100, 101).

8. Procédé de réglage d'un angle de direction dans un guidon à deux roues, le procédé étant mis en œuvre par un dispositif (104, 105, 106, 107, 108, 109, 300) selon l'une des revendications 1 à 7 et le procédé comprenant les étapes de procédé suivantes :
- détecter (400) un mouvement de rotation d'une barre de direction (25, 120) montée en rotation d'un deux-roues au moyen d'une première unité de détection (180, 280), et
- générer (430) une force opposée au mouvement de rotation pour régler le mouvement de rotation en fonction de l'angle de direction au moyen d'un élément à ressort (100, 101) situé à l'intérieur du tube de commande (10, 130).

9. Système de réglage de l'angle de direction d'un guidon de deux roues, le système comprenant
- un dispositif (104, 105, 106, 107, 108, 109, 300) selon l'une des revendications 1 à 8, et
- une unité de calcul (160, 290),
- une première unité de détection (180, 280) destinée à détecter un mouvement de rotation d'une barre de direction du dispositif (104, 105, 106, 107, 108, 109, 300),
l'unité de calcul (160, 290) étant conçue pour commander au moins un composant d'un élément à ressort (100, 101) du dispositif (104, 105, 106, 107, 108, 109, 300) en fonction du mouvement de rotation détecté de la barre de direction (25, 120) de manière à faire varier une force opposée au mouvement de rotation de la barre de direction (25, 120) pour régler le mouvement de rotation en fonction de l'angle de direction.

10. Système selon la revendication 10 de réglage d'un angle de direction d'un deux-roues, **caractérisé en ce que** le deux-roues comprend en outre une deuxième unité de détection (281) destinée à détecter la vitesse du deux-roues, l'unité de calcul (160, 290) réglant la force opposée au mouvement de rotation et la faisant varier en fonction de la vitesse du deux-roues.

11. Deux-roues (1) comprenant un dispositif (104, 105, 106, 107, 108, 109, 300) selon l'une des revendications 1 à 7 ou un système selon l'une des revendications 9 ou 10.
